# FASCICULE DE BREVET EUROPEEN

(11) **EP 3 740 530 B1**
(45) Date de publication et mention de la délivrance du brevet: **18.02.2026**
(21) Numéro de dépôt: 19703174.3
(22) Date de dépôt: 14.01.2019
(51) Int. Cl.: B33Y 70/10, C08K 3/36, C08J 3/12, B29C 64/153, C08L 27/12

(54) **POUDRE DE POLYMERE FLUORE A FENETRE DE FRITTAGE ELARGIE PAR TRAITEMENT THERMIQUE ET SON UTILISATION DANS LE FRITTAGE LASER**
FLUORPOLYMERPULVER MIT DURCH THERMISCHE BEHANDLUNG VERBREITETEN SINTERNARBEITSBEDINGUNGEN UND SEINE VERWENDUNG BEI LASERSINTERN
FLUORINATED POLYMER POWDER WITH SINTERING WORKING CONDITIONS ENLARGED BY THERMAL TREATMENT AND ITS USE IN LASER SINTERING

(30) Priorité: 15.01.2018 FR 1850294
(43) Date de publication de la demande: 25.11.2020
(73) Titulaire: ARKEMA FRANCE, 92800 Puteaux (FR)
(72) Inventeur: BIZET, Stéphane, 27470 SERQUIGNY (FR); BROSSIER, Thomas, 27470 SERQUIGNY (FR)
(74) Mandataire: Arkema Patent
(86) Numéro de dépôt international: PCT/FR2019/050069
(87) Numéro de publication internationale: WO 2019/138199

(56) Documents cités:
- WO-A1-2017/040897
- WO-A2-2007/133912
- DE-A1- 102011 078 766
- US-A1- 2017 321 034

## Description

### DOMAINE DE L'INVENTION

La présente invention concerne une poudre de polymère fluoré additivée d'un agent d'écoulement et traitée thermiquement en présence de l'agent d'écoulement. L'invention concerne aussi un procédé d'agglomération de poudre, couche par couche, par fusion ou frittage mettant en œuvre ladite composition. L'invention se rapporte enfin à un objet en trois dimensions obtenu par la mise en œuvre de ce procédé.

### ARRIERE-PLAN TECHNIQUE

L'agglomération de poudres par fusion (qu'on appelle ci-après « frittage ») est obtenue par un rayonnement tel que par exemple un faisceau laser (« laser sintering »), un rayonnement infrarouge, un rayonnement UV ou toute source de rayonnement électromagnétique permettant de faire fondre la poudre couche par couche pour fabriquer des objets. La technologie de frittage de poudres sous un faisceau laser sert à fabriquer des objets en trois dimensions tels que des prototypes, des modèles, mais aussi des pièces fonctionnelles, notamment dans les domaines automobile, nautique, aéronautique, aérospatial, médical (prothèses, systèmes auditifs, tissus cellulaires...), le textile, l'habillement, la mode, la décoration, des boîtiers pour l'électronique, la téléphonie, la domotique, l'informatique, l'éclairage.

On dépose une fine couche de poudre du polymère considéré sur une plaque horizontale maintenue dans une enceinte chauffée à une certaine température. Le laser apporte l'énergie nécessaire pour fusionner les particules de poudre en différents points de la couche de poudre selon une géométrie correspondant à l'objet, par exemple à l'aide d'un ordinateur ayant en mémoire la forme de l'objet et restituant cette dernière sous forme de tranches. Ensuite, on abaisse la plaque horizontale d'une valeur correspondant à l'épaisseur d'une couche de poudre (par exemple entre 0,05 et 2 mm et généralement de l'ordre de 0,1 mm) puis on dépose une nouvelle couche de poudre. Cette couche de poudre est à une température appelée dans la suite température du lit de poudre (ou température du lit). Le laser apporte l'énergie nécessaire à fusionner les particules de poudre selon une géométrie correspondant à cette nouvelle tranche de l'objet et ainsi de suite. La procédure est répétée jusqu'à ce que l'on ait fabriqué tout l'objet. Outre la fusion des particules de poudre induite par l'énergie apportée par le laser, il est nécessaire d'utiliser des conditions qui permettent la coalescence des particules entre elles et une bonne adhésion/coalescence des couches entre elles de telle sorte que les propriétés mécaniques des objets fabriqués soient maximisées.

Dans le cas des polymères semi-cristallins, la fenêtre de transformation (gamme de température du lit de poudre) est comprise entre la température de cristallisation (Tc) et la température de fusion (Tf) du polymère considéré. Si la température du lit de poudre est trop proche de Tf, alors il y a agglomération de la poudre (« caking ») en dehors de la zone constituant l'objet d'où une perte de matière et de précision dans la définition de la géométrie de la pièce.

Pour faciliter le procédé de frittage laser, il est souhaitable que le polymère possède une fenêtre de frittage la plus large possible et un domaine de fusion étroit. En première approximation, la fenêtre de frittage peut être définie comme la différence entre la température de début de fusion (T_{f,onset}) et la température de début de cristallisation (T_{c,onset}). Lors du procédé de frittage, le bain de poudre est porté à une température (T_{bain}) comprise dans cet intervalle. Lorsque T_{bain} est trop proche de T_{c,onset}, des défauts de géométrie des pièces peuvent apparaitre (gauchissement, mauvaise coalescence entre couche selon l'axe de construction) à cause de la cristallisation trop rapide du polymère. A l'inverse, lorsque T_{bain} est trop proche de la température de début de fusion, le phénomène d'agglomération de la poudre devient prédominant. Une quantité importante de poudre non insolée par le laser reste collée à la surface des pièces ou vient colmater des porosités de la pièce. Une fenêtre de frittage large permet une mise en œuvre plus aisée du matériau car celui-ci tolère plus facilement les gradients de température présents au sein de la machine de frittage au niveau du bac de construction

DE 10 2011 078766 A1 divulgue des poudres de polymère tels que le PVDF qui sont recouvertes d'agent d'écoulement. Ces poudres peuvent être utilisées pour faire des objets en 3D.

Il existe donc un besoin de disposer d'une poudre qui a une faible tendance à s'agglomérer. Une telle poudre permet de travailler à des températures de bain proches de la température de fusion du polymère (température au pic) sans avoir le problème d'agglomération. D'une part, cela permet d'envisager d'utiliser des densités d'énergie plus faibles pour fondre le polymère fluoré lors du procédé de frittage. D'autre part, cela permet de travailler dans une gamme de températures où la cinétique de cristallisation du polymère semi-cristallin est lente ce qui est favorable au développement d'une bonne adhésion entre deux couches successives de polymère déposées.

### RESUME DE L'INVENTION

L'invention concerne une composition de poudre de polymère fluoré thermoplastique adaptée à la fabrication de pièces par le procédé de frittage laser 3D avec une fenêtre de frittage élargie. La fenêtre de frittage est élargie en réalisant un traitement thermique de la poudre pour augmenter le taux de cristallinité et la température de fusion onset. Le traitement thermique permet de décaler vers les plus hautes températures l'apparition du phénomène d'agglomération et de densifier la poudre. Le traitement thermique est particulièrement efficace quand il est réalisé sur une poudre de polymère fluoré thermoplastique additivée d'un agent d'écoulement.

L'invention concerne en premier lieu une composition sous forme de poudre comprenant un polymère fluoré thermoplastique et un agent d'écoulement. hydrophobe De manière caractéristique, la composition de l'invention a été traitée par chauffage à une température allant de T_{f} - 40°C jusqu'à T_{f} - 5°C, T_{f} étant la température de fusion du polymère thermoplastique définie comme la température à laquelle le flux de chaleur mesuré par DSC passe par un maximum dans la zone de fusion du polymère.

Le polymère fluoré contient dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

Selon un mode de réalisation, le polymère fluoré est un polymère comprenant des motifs issus du fluorure de vinylidène, et de préférence est choisi parmi le polyfluorure de vinylidène homopolymère et les copolymères comprenant des motifs de fluorure de vinylidène et des motifs issus d'au moins un autre comonomère copolymérisable avec le fluorure de vinylidène.

Selon un mode de réalisation, le polymère fluoré présente une viscosité inférieure ou égale à 1600 Pa.s, de préférence inférieure ou égale à 1000 Pa.s, à une température de 232°C et à un taux de cisaillement de 100 s⁻¹.

La composition de l'invention comprend en outre un agent d'écoulement hydrophobe en quantité suffisante pour que la composition s'écoule et forme une couche plane, notamment lors d'un procédé de frittage couche par couche.

L'agent d'écoulement est choisi parmi : les silices précipitées, les silices fumées, les silices vitreuses, les silices pyrogénées, les phosphates vitreux, les borates vitreux, les oxydes vitreux, l'alumine amorphe, le dioxyde de titane, le talc, le mica, le kaolin, l'attapulgite, les silicates de calcium, l'alumine et les silicates de magnésium.

Selon un mode de réalisation, l'agent d'écoulement est une silice hydrophobe.

La présente invention a également pour objet l'utilisation d'une composition de poudre thermoplastique telle que définie précédemment, dans un procédé de frittage pour fabriquer un objet tridimensionnel.

La présente invention a notamment pour objet un procédé de fabrication d'un objet tridimensionnel, comprenant le frittage couche par couche d'une poudre de composition selon l'invention.

Enfin, un objet tridimensionnel susceptible d'être fabriqué selon le procédé décrit précédemment est décrit.

La présente invention permet de surmonter les inconvénients de l'état de la technique. Elle fournit une poudre de polymère fluoré avec une bonne coulabilité et une densité apparente augmentée par l'additivation de silice. Elle fournit plus particulièrement une composition présentant une bonne coulabilité et la bonne densité permettent sa mise en œuvre par le procédé de frittage sous rayonnement électromagnétique sans entraîner une agglomération de la poudre. Cela est accompli grâce au traitement thermique qui décale la propension de la poudre à s'agglomérer vers les hautes températures. Le polymère fluoré est choisi par rapport à sa viscosité qui doit être suffisamment faible pour faciliter la coalescence et l'inter-diffusion des chaines entre couches à la température du bain de poudre. Le critère de choix du polymère fluoré peut donc être la viscosité à gradient de cisaillement nul à la température de lit de poudre, qui est typiquement de l'ordre de 150°C pour le PVDF. Le fait d'avoir une bonne coulabilité, une bonne densité et une bonne qualité du lit de poudre, et une viscosité du polymère adaptée permet de travailler dans des conditions de procédé (densité d'énergie du laser, nombre de passage du laser par couche) standards sans risquer de dégrader le polymère fluoré et générer de l'acide fluorhydrique lors de la fabrication de la pièce.

Elle est particulièrement appropriée pour la fabrication d'objets en trois dimensions.

### BREVE DESCRIPTION DES FIGURES

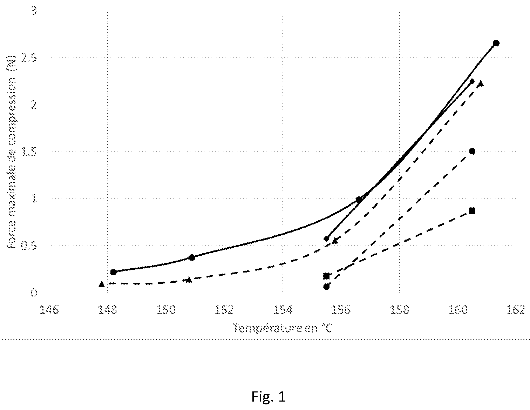

La **figure 1** est un diagramme représentant la variation de la force de compression en fonction de la température, pour diverses compositions de poudre à base de PVDF.

### DESCRIPTION DE MODES DE REALISATION DE L'INVENTION

L'invention est maintenant décrite plus en détail et de façon non limitative dans la description qui suit.

Selon un premier aspect, l'invention concerne une composition pulvérulente adaptée au frittage laser comprenant un polymère fluoré thermoplastique et un agent d'écoulement, ayant subi un chauffage à une température allant de T_{f}- 40°C jusqu'à T_{f-} 5°C, de préférence à une température allant de T_{f -} 30°C jusqu'à T_{f-} 5°C. Ce traitement permet de réduire la propension de la poudre à s'agglomérer. Cette tendance à l'agglomération est évaluée selon un test de compression réalisé sur la poudre ayant subi le traitement thermique. Plus précisément, le test consiste à remplir des cylindres creux métalliques de 15 mm de diamètre interne et 2 cm de hauteur avec la poudre d'étude. Les cylindres métalliques jouent le rôle de moule. Une fois remplis, les cylindres sont placés dans une étuve à la température d'évaluation du caking pendant un temps donné par exemple 8 heures. Les cylindres sont sortis de l'étuve et laissés refroidir jusqu'à température ambiante. Ensuite, un « gâteau » de poudre est obtenu en retirant le cylindre métallique. Ce gâteau de poudre est ensuite placé entre les mors d'un dynamomètre pour subir un test de compression. La force de compression est enregistrée en fonction du déplacement des mors. La force maximale atteinte lors du test de compression est enregistrée. Avantageusement, la composition ainsi traitée présente une force de compression inférieure à 2 N, de préférence inférieure ou égale à 1,5 N. La température de fusion du polymère thermoplastique est mesurée par calorimétrie différentielle à balayage (DSC) à 20°C/min. La température de fusion correspond à la température du maximum du flux de chaleur dans la zone de fusion du polymère.

Selon diverses réalisations, ladite composition comprend les caractères suivants, le cas échéant combinés.

L'invention repose d'abord sur l'utilisation d'un polymère fluoré. Par « *fluoré* » on entend un polymère comportant des groupements -F. Le polymère fluoré contient dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy. A titre d'exemple de monomère on peut citer le fluorure de vinyle; le fluorure de vinylidène (VDF); le trifluoroéthylène (VF3); le chlorotrifluoroéthylène (CTFE); le 1,2-difluoroéthylène; le tétrafluoroéthylène (TFE); l'hexafluoropropylène (HFP); les perfluoro(alkyl vinyl) éthers tels que le perfluoro(méthyl vinyl)éther (PMVE), le perfluoro(éthyl vinyl) éther (PEVE) et le perfluoro(propyl vinyl) éther (PPVE); le perfluoro (1,3-dioxole); le perfluoro(2,2-diméthyl- 1,3 -dioxole) (PDD); le produit de formule CF₂=CFOCF₂CF(CF₃)OCF₂CF₂X dans laquelle X est SO₂F, CO₂H, CH₂OH, CH₂OCN ou CH₂0PO₃H; le produit de formule CF₂=CFOCF₂CF₂SO₂F; le produit de formule F(CF₂)nCH₂0CF=CF₂ dans laquelle n est 1, 2, 3, 4 or 5; le produit de formule R₁ CH₂OCF=CF₂ dans laquelle R₁ est l'hydrogene ou F(CF₂)ₘ et m vaut 1, 2, 3 ou 4; le produit de formule R₂OCF=CH₂ dans laquelle R₂ est F(CF₂)p et p est 1, 2, 3 or 4; le perfluorobutyl éthylène (PFBE); le 3,3,3-trifluoropropène et le 2-trifluorométhyl-3,3,3-trifluoro-1-propène.

Le polymère fluoré peut être un homopolymère ou un copolymère, il peut aussi comprendre des monomères non fluorés tels que l'éthylène.

Selon un mode de réalisation, le polymère fluoré est un homopolymère de l'un des monomères suivants : fluorure de vinyle, de fluorure de vinylidène, de chlorotrifluoroéthylène, ou tétrafluoroéthylène.

Selon un mode de réalisation, le polymère fluoré est choisi parmi les copolymères d'éthylène et de chlorotrifluoroethylène, d'éthylène et de térafluoroéthylène, d'hexafluoropropylène et de tétrafluoroéthylène, de tétrafluoroéthylène et d'un monomère de la famille des perfluoro(alkyl vinyl)éther.

Selon un mode de réalisation, le polymère fluoré est un polymère comprenant des motifs issus du fluorure de vinylidène, et de préférence est choisi parmi le polyfluorure de vinylidène homopolymère et les copolymères comprenant des motifs de fluorure de vinylidène et des motifs issus d'au moins un autre comonomère choisi parmi : le fluorure de vinyle; le trifluoroéthylène; le chlorotrifluoroéthylène; le 1,2-difluoroéthylène; le tétrafluoroéthylène; l'hexafluoropropylène; les perfluoro(alkyl vinyl) éthers tels que le perfluoro(méthyl vinyl)éther, le perfluoro(éthyl vinyl) éther et le perfluoro(propyl vinyl) éther; le perfluoro(1,3-dioxole); le perfluoro(2,2-diméthyl-1,3-dioxole), et leur mélanges. De préférence le comonomère fluoré est choisi parmi le chlorotrifluoroéthylène, l'hexafluoropropylène, le trifluoroéthylène et le tétrafluoroéthylène, et leurs mélanges. Dans une variante, le copolymère ne comprend que du VDF et de l'HFP. De manière plus particulièrement préférée, les copolymères contiennent au moins 50 % en moles de motifs issus du fluorure de vinylidène, et de manière encore plus préférée au moins 75 % en moles de motifs issus du fluorure de vinylidène.

Selon un mode de réalisation, le polymère fluoré est un terpolymère d'éthylène, d'hexafluororpopylène et de tetrafluoroéthylène, ou un terpolymère de tétrafluoroéthylène, de fluorure de vinylidène et d'hexafluorure de propylène.

Par « thermoplastique », on entend ici un polymère non élastomérique. Un polymère élastomérique est défini comme étant un polymère qui peut être étiré, à température ambiante, à deux fois sa longueur initiale et qui, après relâchement des contraintes, reprend rapidement sa longueur initiale, à 10 % près, comme indiqué par l'ASTM dans la Special Technical Publication n°184.

Selon un mode de réalisation, le polymère fluoré présente une viscosité inférieure ou égale à 1600 Pa.s, de préférence inférieure ou égale à 1000 Pa.s, à une température de 232°C et à un taux de cisaillement de 100 s⁻¹. La viscosité est mesurée à 232°C, à un taux de cisaillement de 100 s⁻¹ à l'aide d'un rhéomètre capillaire ou d'un rhéomètre à plaques parallèles, selon la norme ASTM D3825.

Selon un mode de réalisation, qui peut être combiné à celui décrit dans le paragraphe précédent, le polymère fluoré présente une viscosité à gradient de cisaillement nul à la température du lit de poudre inférieure ou égale à 75 000 Pa.s, préférentiellement inférieure à 25 000 Pa.s et encore plus préférentiellement inférieure à 15000 Pa.s. La méthode employée pour mesurer la viscosité à gradient de cisaillement nul à la température du lit de poudre est la suivante. La viscosité est mesurée à l'aide d'un rhéomètre plan/plan à trois températures, supérieures à la température de fusion du polymère fluoré. Typiquement, la viscosité est mesurée à trois températures T₁, T₂, T₃ telles que T₁ <T₂<T₃ et T₁ soit supérieure à la température de fusion du polymère fluoré. A chaque température, la viscosité est mesurée sur une gamme de fréquences angulaires. Pour une température donnée, la viscosité devient indépendante de la fréquence angulaire en dessous d'une fréquence angulaire critique et atteint un plateau qui correspond à la valeur de la viscosité à gradient de cisaillement nul. La température T₁ et la gamme de fréquences angulaires de mesure sont choisies de façon à atteindre la viscosité à gradient de cisaillement nul. La viscosité à gradient de cisaillement nul à la température du lit de poudre est ensuite obtenue par extrapolation de la droite représentant le logarithme de la viscosité à gradient de cisaillement nul en fonction de l'inverse de la température en degrés Kelvin. Par exemple, dans le cas où le polymère fluoré est un homopolymère de fluorure de vinylidène ou un copolymère de fluorure de vinylidène et d'hexafluoropropylène, les températures typiquement choisies pour la mesure de viscosité sont 190°C, 210°C, 230°C et les fréquences angulaires sont typiquement comprises entre 0,1 rad/s et 100 rad/s.

Dans le cas où le polymère fluoré est le polyfluorure de vinylidène, le polymère fluoré peut être un mélange de deux ou plus d'homopolymères de fluorure de vinylidène présentant des viscosités différentes. La viscosité du mélange, mesurée à 232°C et 100 s⁻¹, est inférieure ou égale à 1600 Pa.s.

Dans le cas où le polymère fluoré est un copolymère de fluorure de vinylidène et d'au moins un autre comonomère listé ci-dessus, le polymère fluoré peut être un mélange de deux ou plus de copolymères présentant des viscosités différentes. La viscosité du mélange, mesurée à 232°C et 100 s⁻¹, est inférieure ou égale à 1600 Pa.s.

La poudre de polymère fluoré possède une taille de particule définie par un Dv50 inférieur ou égal à 100 µm, plus précisément entre 25 et 80 micromètres.

Le Dv50 appelé ici est le diamètre médian en volume qui correspond à la valeur de la taille de particule qui divise la population de particules examinée exactement en deux. Le Dv50 est mesuré selon la norme ISO 9276 - parties 1 à 6. Dans la présente description, on utilise un granulomètre Malvern Système INSITEC, et la mesure est faite en voie sèche par diffraction laser sur la poudre.

Le polymère fluoré utilisé dans l'invention peut être obtenu par des méthodes de polymérisation connues comme la polymérisation en solution, en émulsion ou en suspension. Selon un mode de réalisation, il est préparé par un procédé de polymérisation en émulsion en l'absence d'agent tensioactif fluoré.

Le polymère fluoré utilisé dans l'invention présente de préférence une masse moléculaire en nombre allant de 5 kDa à 200 kDa, de préférence de 5 kDa à 150 kDa, et encore plus préférentiellement de 5 kDa à 120 kDa, comme mesuré par chromatographie d'exclusion stérique en DMSO/NaNO₃ 0,1 M avec du polyméthacrylate de méthyle comme standard de calibration.

Un tel polymère fluoré de faible masse moléculaire peut être obtenu notamment en utilisant un taux élevé d'un ou plusieurs agents de transfert de chaîne lors du procédé de polymérisation. Selon un mode de réalisation, des agents de transfert de chaîne adaptés à ce but sont choisis parmi:
- les hydrocarbures à chaîne courte, tels que l'éthane et le propane,
- les esters, tels que l'acétate d'éthyle et le maléate de diéthyle,
- les alcools, les carbonates, les cétones,
- les halocarbures et les hydrohalocarbures, tels que les chlorocarnures, hydrochlorocarbures, chlorofluorocarbures et les hydrochlorofluorocarbures,
- les solvants organiques, lorsqu'ils sont ajoutés à une réaction de polymérisation en émulsion ou en suspension.

D'autres facteurs favorisant l'obtention de polymères de bas poids moléculaire sont la conduite de la réaction de polymérisation à des températures élevées, ou encore l'emploi de taux élevés d'initiateur.

Le polymère fluoré utilisé dans l'invention, lorsqu'il s'agit d'un copolymère, peut être homogène ou hétérogène, et de préférence homogène. Un polymère homogène présente une structure de chaînes uniforme, la répartition statistique des comonomères ne variant pas entre les chaînes polymères. Un copolymère homogène peut être préparé par un procédé en une seule étape, dans lequel les comonomères sont injectés progressivement en conservant un rapport massique entre eux constant. Dans un polymère hétérogène, les chaînes polymères présentent une distribution en teneur moyenne en comonomères de type multimodale ou étalée, il comprend donc des chaînes polymères riches en un comonomère et des chaînes polymères pauvres en ledit comonomère. Un exemple de PVDF hétérogène figure dans le document WO 2007/080338.

La composition de l'invention comprend en outre un agent d'écoulement hydrophobe en quantité suffisante pour que la composition s'écoule et forme une couche plane, notamment lors d'un procédé de frittage couche par couche.

L'agent d'écoulement est choisi parmi : les silices précipitées, les silices fumées, les silices vitreuses, les silices pyrogénées, les phosphates vitreux, les borates vitreux, les oxydes vitreux, l'alumine amorphe, le dioxyde de titane, le talc, le mica, le kaolin, l'attapulgite, les silicates de calcium, l'alumine et les silicates de magnésium. De plus, préférentiellement, l'agent d'écoulement a subi une modification chimique de surface de façon à lui conférer un caractère hydrophobe. Par exemple, l'agent d'écoulement est une silice fumée hydrophobe.

L'agent d'écoulement possède une taille de particule telle que le Dv50 est inférieur à 20µm.

Selon un mode de réalisation, l'agent d'écoulement est une silice hydrophobe. La silice peut être rendue hydrophobe en greffant des groupes hydrophobes sur les fonctions silanol présentes à la surface. Il a été montré qu'une silice hydrophile (non traitée en surface) n'améliorait pas les propriétés d'écoulement d'une poudre de PVDF. Sans ajout de silice, la poudre de PVDF ne s'écoule pas suffisamment bien pour pouvoir être frittée.

Pour obtenir une coulabilité améliorée du polymère fluoré lors du procédé de frittage il faut utiliser un taux optimal d'agent d'écoulement, qui dépend de la nature de celui-ci et sa granulométrie.

Il a été remarqué qu'une poudre de polymère fluoré additivée de 0,4% de silice hydrophobe a une coulabilité supérieure à celle d'une poudre non additivée, mais inférieure à celle d'une poudre additivée à 0,2% de silice. La poudre additivée à 0,4% de silice hydrophobe peut toujours être « frittée » mais la fenêtre de frittage de la poudre est plus étroite, c'est-à-dire la gamme de température de lit de poudre qui permet un frittage correct de la poudre devient très étroite et difficile à cerner.

La composition de l'invention comprend une teneur en agent d'écoulement allant de 0,01 à 5% en poids de la composition, de préférence allant de 0,025 à 1%.

De préférence, l'agent d'écoulement est de forme sphérique.

Selon un mode de réalisation, la composition de l'invention consiste en un polymère fluoré et un agent d'écoulement, tels que décrits.

Selon un autre mode de réalisation, la composition de l'invention comprend en outre au moins un additif approprié pour les poudres polymères utilisées en frittage, choisi notamment parmi des additifs qui contribuent à améliorer les propriétés de la poudre pour son utilisation en technologie d'agglomération et/ou des additifs permettant d'améliorer les propriétés mécaniques (contrainte à la rupture et allongement à la rupture) ou esthétiques (couleur) des objets obtenus par fusion. La composition de l'invention peut notamment comprendre des colorants, des pigments pour la coloration, des pigments pour l'absorption infra rouge, du noir de carbone, des additifs anti-feu, des fibres de verre, des fibres de carbone, etc. Ces additifs sont sous forme de poudre de Dv50 inférieur à 20 µm. Les compositions de l'invention peuvent contenir en outre au moins un additif choisi parmi les stabilisants anti-oxydant, les stabilisants à la lumière, les agents anti-chocs, les agents antistatiques, les agents ignifugeants, et leurs mélanges. Le taux total d'additifs est inférieur ou égal à 50% en poids de la composition.

La poudre de polymère fluoré peut être obtenue par différents procédés. La poudre peut être obtenue directement par un procédé de synthèse en émulsion ou suspension par séchage par pulvérisation (« spray drying »), par lyophilisation (« freeze drying »). La poudre peut également être obtenue par les techniques de broyage, comme le cryo-broyage. La poudre de polymère fluoré possède une taille de particule caractérisée par un diamètre Dv50 inférieur ou égal à 100 µm. A l'issue de l'étape de fabrication de la poudre, la taille de particule peut être ajustée et optimisée pour le procédé de frittage sous rayonnement électromagnétique par des méthodes de sélection ou de tamisage.

L'agent d'écoulement est ajouté à la poudre de polymère fluoré et mélangé. Lorsque la composition comprend aussi un additif, celui-ci est ajouté en voie fondue en utilisant les moyens classiques de mélange des polymères thermoplastiques tels que des extrudeuses à simple vis, à double vis co- ou contra-rotative ou les co-malaxeurs.

Pour ce qui est du traitement thermique de la composition, on peut utiliser des traitements en isotherme à la température de recuit ou des paliers de température successifs ou une rampe de température. Le temps de traitement est de 10 minutes à plusieurs heures à la température maximale de recuit. Dans le cas où le polymère fluoré est un homopolymère de fluorure de vinylidène obtenu par un procédé de synthèse en émulsion, la fenêtre de température du traitement thermique est avantageusement comprise entre 140°C et 165°C et encore plus avantageusement entre 140°C et 160°C. Dans le cas où le polymère fluoré est un hompolymère de fluorure de vinylidène obtenu par un procédé de synthèse en suspension, la fenêtre de température du traitement thermique est avantageusement comprise entre 145°C et 170°C et encore plus avantageusement entre 145°C et 165°C.

Le traitement thermique peut être effectué en « statique » en plaçant la poudre dans un récipient dans une étuve, ou en dynamique en utilisant un système chauffant en rotation par exemple.

La présente invention a également pour objet l'utilisation d'une composition de poudre thermoplastique telle que définie précédemment, dans un procédé de frittage pour fabriquer un objet tridimensionnel.

La présente invention a notamment pour objet un procédé de fabrication d'un objet tridimensionnel, comprenant le frittage couche par couche d'une poudre de composition selon l'invention. Selon un mode de réalisation, ledit procédé utilise le frittage laser (« laser sintering »), dont les principes sont décrits dans les documents US6136948, WO96/06881 et US20040138363, comprend les étapes suivantes:
a) déposer une fine couche de poudre de la composition de l'invention sur une plaque horizontale maintenue dans une enceinte chauffée à une certaine température ;
b) fondre par l'énergie apportée par un laser les particules de poudre en différents points de la couche de poudre selon une géométrie correspondant à l'objet, par exemple à l'aide d'un ordinateur ayant en mémoire la forme de l'objet et restituant cette dernière sous forme de tranches ;
c) abaisser la plaque horizontale d'une valeur correspondant à l'épaisseur d'une couche de poudre, par exemple entre 0,05 et 2 mm et généralement de l'ordre de 0,1 mm ;
d) déposer une nouvelle couche de poudre. Cette couche est à une température appelée température du lit de poudre (ou température du lit) ;
e) fondre cette nouvelle couche par l'énergie apportée par le laser selon une géométrie correspondant à cette nouvelle tranche de l'objet ;
f) répéter la procédure des étapes c), d) et e) jusqu'à ce que tout l'objet ait été fabriqué ;
g) refroidir l'ensemble à l'issue de la fabrication complète de l'objet ;
h) séparer l'objet fabriqué de la poudre environnante n'ayant pas été fondue.

Un objet tridimensionnel susceptible d'être fabriqué selon le procédé décrit précédemment est décrit.

L'emploi d'une composition traitée thermiquement selon l'invention permet de décaler vers les hautes températures la propension de la poudre de polymère fluoré à s'agglomérer. Cet effet est d'autant plus marqué que la poudre a été additivée d'un agent d'écoulement, notamment hydrophobe.

Les avantages obtenus sont :
- une augmentation de la température d'apparition de l'agglomération («caking ») de la poudre de polymère fluoré thermoplastique ;
- une amélioration de la coulabilité de la poudre à température ambiante et à la température du procédé de frittage ;
- une augmentation de la densité tassé et non tassée ;
- l'amélioration des propriétés des pièces frittées.

Par ailleurs, l'association d'un polyfluorure de vinylidène ou d'un copolymère de difluorure de vinylidène ayant une viscosité adaptée et de l'additivation de la poudre de PVDF avec une silice hydrophobe permet le frittage de la poudre de PVDF avec des paramètres procédé standard. Par exemple, cela permet d'utiliser des densités d'énergie d'irradiation de l'ordre de 25 à 45 mJ/mm² en un seul scan pour une machine de frittage Formiga P100 de chez EOS. Les pièces obtenues possèdent une bonne géométrie et des propriétés mécaniques satisfaisantes. La cristallinité et les masses molaires du PVDF sont préservées à l'issue du procédé de frittage dans les pièces fabriquées.

### EXEMPLES

Les exemples suivants illustrent l'invention sans la limiter.

### Produits :

PVDF : Homopolymère de difluorure de vinylidène qui possède une viscosité à l'état fondu mesurée à 230°C et 100 s⁻¹ de 250 Pa.s.

Agent d'écoulement 1 (AE1): L'agent d'écoulement AE1 est une silice fumée de chez Cabot commercialisée sous le nom Carb-o-sil TS610. La surface a été modifiée avec du diméthyl dichlorosilane pour lui conférer un caractère hydrophobe. Elle possède un diamètre Dv50 inférieur à 20µm.

Agent d'écoulement 2 (AE2) : L'agent d'écoulement AE2 est une silice fumée hydrophile de chez Cabot commercialisée sous le nom Carb-o-sil M5. Elle possède un diamètre Dv50 inférieur à 20µm.

### Préparation de la poudre de PVDF:

La poudre de PVDF a été préparée par cryo-broyage en 2 étapes avec un broyeur Netzch CUM 150. La première étape a consisté en un pré-broyage cryogénique de granulés. Pour cette étape, le broyeur est équipé de disques à broches de diamètre 5mm. La vitesse de rotation des disques est fixée à 14000 tours/minute. La poudre ainsi obtenue est ensuite cryo-broyée une seconde fois sur le même broyeur Netzch mais équipé d'un rotor soufflant et d'une grille dans la chambre de broyage de 100µm. La vitesse du rotor est fixée à 12000 tours/minute, le débit à 5kg/h. La poudre obtenue présente une distribution de taille de particules caractérisée par un DV50 de 50µm.

La poudre de PVDF a ensuite été mélangée aux agents d'écoulement AE1 ou AE2 à hauteur de 0,2% en poids à l'aide d'un mélangeur de type robot ménager MAGIMIX à grande vitesse pendant 110 secondes.

### Caractérisation des propriétés de la poudre de PVDF:

Granulométrie : La distribution de taille de particules a été mesurée par voie sèche à l'aide d'un granulomètre laser de type MALVERN Système INSITEC.

Coulabilité : La coulabilité est évaluée selon la norme ISO 6186. Cela consiste à mesurer le temps d'écoulement d'une quantité donnée de poudre au travers d'un entonnoir dont le diamètre de sortie est fixé à 25mm. Plus le temps est court, mieux la poudre s'écoule.

### Densité :

La densité dite «non tassée » de la poudre a été mesurée de la façon suivante. Une éprouvette graduée de 250 ml a été remplie avec la poudre. Le volume exacte et la masse sont mesurées d'où on déduit la densité. La densité dite tassée a été obtenue en faisant subir une série de choc verticaux contrôlés (amplitude, fréquence) à l'éprouvette préalablement remplie pour la mesure de la densité non tassée.

### Caractérisation des éprouvettes après frittage

### Propriétés mécaniques:

Les propriétés mécaniques des éprouvettes frittées ont été mesurées à l'aide d'un dynamomètre Zwick 3 muni d'une cellule de force de 10kN. Le déplacement a été mesuré à l'aide d'extensomètre optique. La vitesse de déplacement a été fixée à 5 mm/min.

### Dégradation du PVDF dans les éprouvettes frittées :

La dégradation du PVDF a été évaluée par mesure des masses molaires par GPC et estimation d'un taux de gel/insolubles.

### Analyse GPC :

Les masses molaires avant et après passage en machine ont été mesurées par GPC à l'aide d'une chaîne d'analyse de chez Waters munie d'une Pompe P600, d'un injecteur Wisp 717Plus et d'un détecteur réfractomètre Waters 2414 RID. La température des colonnes est régulée à 50°C. L'échantillon à analyser est dissous dans le DMSO + 0,1 M NaNO₃ à une concentration de 2g/L pendant 4h à 95°C. La solution est ensuite filtrée à l'aide d'un filtre ACRODISC GHP Polypropylène de diamètre 25 mm de porosité 0,45µm. Les masses sont exprimées en équivalent PMMA. La fraction d'insoluble est estimée en comparant l'intensité du signal du réfractomètre à celle d'un PVDF complètement soluble.

La cristallinité des éprouvettes après frittage a été évaluée par DSC et diffraction des rayons X.

### Propriétés de la poudre

La silice hydrophobe permet l'écoulement de la poudre au travers de l'orifice de l'entonnoir. Dans ce test, un temps d'écoulement de 7 secondes est considéré comme un signe de très bonne coulabilité. Sans silice ou additivée de silice hydrophile AE2, la poudre ne s'écoule pas et n'est pas utilisable en tant que telle dans le procédé de frittage à cause de cette mauvaise coulabilité. Les résultats sont présentés dans le Tableau 1.

**Tableau 1**

| | Temps d'écoulement (s) | Densité non tassée | Densité tassée |
|---|---|---|---|
| Poudre de PVDF non additivée de silice | Ne s'écoule pas | 0,651 | 0,905 |
| Poudre de PVDF additivée de silice hydrophobe AE1 | 7 s | 0,726 | 0,955 |
| Poudre de PVDF additivée de silice hydrophile AE2 | Ne s'écoule pas | 0,651 | 0,815 |

### Passage de la poudre PVDF additivée de silice hydrophobe en machine de frittage :

Des éprouvettes de traction de type ISO 527 1BA et 1A ont été réalisées par frittage avec une machine Laser Sintering Formiga P100 de chez EOS. Les conditions de passage en machine ont été les suivantes :
- Vitesse du contour = 1500mm/s
- Vitesse de hachurage = 2500 mm/s
- Hachurage « déplacement du rayon » = 0,15mm.

Les conditions opératoires sont résumées dans le Tableau 2 suivant :

**Tableau 2**

| Température de la chambre d'exposition (°C) | Température de la chambre de retrait (°C) | Densité d'énergie (mJ/mm²) | Puissance laser (W) |
|---|---|---|---|
| 152°C | 135°C | 35 | 13,13 |
| 152°C | 135°C | 40 | 15 |
| 152°C | 135°C | 43 | 16,125 |

La caractérisation de la composition de PVDF selon l'invention selon les méthodes indiquées ci-dessus a permis d'obtenir les résultats figurant dans le Tableau 3.

**Tableau 3**

| | Température de la chambre d'exposition (°C) | Densité d'énergie (mJ/mm²) | Mn (g/mol) | Mw (g/mol) | Signal réfractométrique K(RI) | Fraction d'insoluble |
|---|---|---|---|---|---|---|
| Poudre de PVDF | - | - | 82300 | 219000 | 87,8 | 0% |
| Eprouvette 1BA de PVDF frittée | 152°C | 43 | 81300 | 220200 | 88,4 | 0% |

Ces résultats montrent qu'aucune dégradation du PVDF, évaluée par rapport à la taille des chaines de PVDF ou à la présence d'insoluble, n'a été observée par GPC.

### Traitement thermique de la poudre

Formulation de la poudre avec la silice : 0,2% en poids de silice Car o-sil TS610 sont mélangés avec la poudre de PVDF à l'aide d'un mélangeur rapide.

La poudre de PVDF additivée ou non de silice subit différents traitements thermiques:
- 8h à 150°C
- 8h à 155°C.

Le traitement thermique est réalisé en statique en déposant la poudre dans un récipient qui est mis dans une étuve.

La propension de la poudre à faire du « caking » est évaluée à l'aide d'un test mécanique de compression à température ambiante. Le test consiste à remplir des cylindres creux métalliques de 15 mm de diamètre interne et 2 cm de hauteur avec la poudre d'étude. Les cylindres métalliques jouent le rôle de moule. Une fois remplis, les cylindres sont placés dans une étuve à la température d'évaluation du caking soit 150°C, 155°C ou 160°C pendant 8 heures. Les cylindres sont sortis de l'étuve et laissés refroidir jusqu'à température ambiante. Ensuite, un « gâteau » de poudre est obtenu en retirant le cylindre métallique. Ce gâteau de poudre est ensuite placé entre les mors d'un dynamomètre pour subir un test de compression. La force de compression est enregistrée en fonction du déplacement des mors. La force maximale atteinte lors du test de compression est enregistrée. L'ensemble des poudres testées sont comparées sur ce critère.

Les conditions du test sont regroupées dans le Tableau 4 ci-dessous. Les résultats sont exprimés en N.

**Tableau 4**

| Type de traitement de la poudre avant test de caking | Pas de traitement thermique | | | 8h en étuve à 150°C | | | 8h en étuve à 155°C | | |
|---|---|---|---|---|---|---|---|---|---|
| Température du test de caking | 150°C | 155°C | 160°C | 150°C | 155°C | 160°C | 150°C | 155°C | 160°C |
| PVDF | 0,38 | 0,99 | 2,66 | - | 0,58 | 2,25 | - | - | - |
| PVDF +0,2% silice | 0,14 | 0,56 | 2,23 | - | 0,07 | 1,51 | - | 0,18 | 0,87 |

Les données du tableau sont reprises sur la figure 1 annexée.

La courbe en trait plein avec symbole rond plein représente la force maximale de compression en fonction de la température d'une poudre de PVDF non additivée de silice et n'ayant subi aucun traitement thermique avant les tests de caking.

La courbe en trait plein avec symbole losange plein représente la force maximale de compression en fonction de la température d'une poudre de PVDF non additivée de silice et ayant subi un traitement thermique de 8h à 150°C avant les tests de caking.

La courbe en traits pointillés avec symbole triangle plein représente la force maximale de compression en fonction de la température d'une poudre de PVDF additivée de 0.2% de silice et n'ayant subi aucun traitement thermique avant les tests de caking.

La courbe en traits pointillés avec symbole rond plein représente la force maximale de compression en fonction de la température d'une poudre de PVDF additivée de 0.2% de silice et ayant subi un traitement thermique de 8h à 150°C avant les tests de caking.

La courbe en traits pointillés avec symbole carré plein représente la force maximale de compression en fonction de la température d'une poudre de PVDF additivée de 0.2% de silice et ayant subi un traitement thermique de 8h à 155°C avant les tests de caking.

Les résultats indiqués dans la Fig. 1 montrent que plus la force de compression mesurée est élevée plus ceci révèle la propension de la poudre à s'agglomérer. Au-delà de 2N, l'agglomération de la poudre est notable et partiellement irréversible sous une sollicitation mécanique modérée. A 160°C, les poudres additivées de silice et traitées thermiquement à 150°C ou 155°C ont une force de compression inférieure ou égale à 1.5N et ne montrent pas de signe d'agglomération irréversible. Ce comportement offre la possibilité d'avoir recours à des températures de frittage plus élevées qu'une poudre de PVDF non traitée c'est-à-dire à des températures où la cinétique de cristallisation du PVDF est plus lente.

Par ailleurs, il a été constaté que le traitement thermique d'une composition selon l'invention augmente les densités, tassée et non tassée, de la poudre, comme montré par les résultats figurant dans le Tableau 5 (exprimés en g/cm³). Cette propriété est favorable pour le frittage laser car elle permet d'avoir un bain de poudre plus dense et plus homogène lors de la construction des pièces.

**Tableau 5**

| | Densité non tassée | Densité tassée |
|---|---|---|
| Poudre PVDF | 0,651 | 0,905 |
| Poudre PVDF traitée 8h à 150°C | 0,726 | 0,955 |
| Poudre PVDF + 0,2% silice traitée 8h 150°C | 0,745 | 1,035 |

## Revendications

1. Composition sous forme de poudre comprenant un polymère thermoplastique fluoré et un agent d'écoulement hydrophobe, ladite composition ayant subi un chauffage à une température allant de T_{f} - 40°C jusqu'à T_{f} - 5°C, T_{f} étant la température de fusion du polymère thermoplastique mesurée par DSC à 20°C/min, ledit agent d'écoulement hydrophobe étant choisi parmi : les silices précipitées, les silices fumées, les silices vitreuses, les silices pyrogénées, les phosphates vitreux, les borates vitreux, les oxydes vitreux, l'alumine amorphe, le dioxyde de titane, le talc, le mica, le kaolin, l'attapulgite, les silicates de calcium, l'alumine et les silicates de magnésium.

2. Composition selon la revendication 1 présentant une force de compression inférieure à 2 N, de préférence inférieure à 1,5 N comme mesurée par un test de compression réalisé sur la poudre ayant subi le traitement thermique.

3. Composition selon l'une des revendications 1 et 2, dans laquelle le polymère fluoré est
un homopolymère ou un copolymère comprenant au moins un monomère listé ci-après: le fluorure de vinyle; le fluorure de vinylidène; le trifluoroéthylène; le chlorotrifluoroéthylène; le 1,2-difluoroéthylène; le tétrafluoroéthylène; l'hexafluoropropylène; les perfluoro(alkyl vinyl) éthers tels que le perfluoro(méthyl vinyl)éther, le perfluoro(éthyl vinyl) éther et le perfluoro(propyl vinyl) éther; le perfluoro (1,3-dioxole); le perfluoro(2,2-diméthyl- 1,3 -dioxole) ; le produit de formule CF₂=CFOCF₂CF(CF₃)OCF₂CF₂X dans laquelle X est SO₂F, CO₂H, CH₂OH, CH₂OCN ou CH₂0PO₃H; le produit de formule CF₂=CFOCF₂CF₂SO₂F, le produit de formule F(CF₂)nCH₂0CF=CF₂ dans laquelle n est 1, 2, 3, 4 or 5; le produit de formule R₁CH₂OCF=CF₂ dans laquelle R₁ est l'hydrogene ou F(CF₂)ₘ et m vaut 1, 2, 3 ou 4; le produit de formule R₂OCF=CH₂ dans laquelle R₂ est F(CF₂)p et p est 1, 2, 3 or 4; le perfluorobutyl éthylène (PFBE); le 3,3,3-trifluoropropène et le 2-trifluorométhyl-3,3,3-trifluoro-1-propène.

4. Composition selon l'une des revendications 1 à 3, dans laquelle ledit polymère fluoré est un polymère comprenant des motifs issus du fluorure de vinylidène, et est choisi parmi le polyfluorure de vinylidène homopolymère et les copolymères comprenant au moins 50 %, et de préférence au moins 75 % en moles de motifs issus du fluorure de vinylidène des motifs de fluorure de vinylidène et le reste des motifs issus d'au moins un autre comonomère choisi parmi : le fluorure de vinyle; le trifluoroéthylène; le chlorotrifluoroéthylène; le 1,2-difluoroéthylène; le tétrafluoroéthylène; l'hexafluoropropylène; les perfluoro(alkyl vinyl) éthers tels que le perfluoro(méthyl vinyl)éther, le perfluoro(éthyl vinyl) éther et le perfluoro(propyl vinyl) éther; le perfluoro(1,3-dioxole); le perfluoro(2,2-diméthyl-1,3-dioxole), et leur mélanges.

5. Composition selon l'une des revendications 1 à 3, dans laquelle ledit polymère fluoré est choisi parmi les copolymères d'éthylène et de chlorotrifluoroethylène, d'éthylène et de térafluoroéthylène, d'hexafluoropropylène et de tétrafluoroéthylène, de tétrafluoroéthylène et d'un monomère de la famille des perfluoro(alkyl vinyl)éther

6. Composition selon l'une des revendications 1 à 5, dans laquelle ledit polymère fluoré a une viscosité inférieure ou égale à 1600 Pa.s, de préférence inférieure ou égale à 1000 Pa.s, mesurée à une température de 232°C et à un taux de cisaillement de 100 s⁻¹ selon la norme ASTM D3825.

7. Composition selon l'une des revendications 1 à 6 dans laquelle la poudre de polymère fluoré possède une taille de particule définie par un Dv50 inférieur ou égal à 100 µm, de préférence entre 25 et 80 micromètres.

8. Composition selon l'une des revendications 1 à 7, dans laquelle ledit polymère fluoré présente une masse moléculaire en nombre allant de 5 kDa à 200 kDa, de préférence de 5 kDa à 150 kDa, et encore plus préférentiellement de 5 kDa à 120 kDa.

9. Composition selon l'une des revendications 1 à 8, dans laquelle ledit agent d'écoulement hydrophobe est une silice fumée hydrophobe.

10. Composition selon l'une des revendications 1 à 9, dans laquelle la proportion massique d'agent écoulement est comprise entre 0,01 et 5%, de préférence entre 0,025 et 1% du poids total de la composition.

11. Composition selon l'une des revendications 1 à 10, consistant en un polymère fluoré et un agent d'écoulement.

12. Composition selon l'une des revendications 1 à 10, comprenant en outre jusqu'à 50% en poids d'un ou plusieurs additifs choisis parmi des colorants, des pigments pour la coloration, des pigments pour l'absorption infra rouge, du noir de carbone, des additifs anti-feu, des fibres de verre, des fibres de carbone, les stabilisants anti-oxydant, les stabilisants à la lumière, les agents anti-chocs, les agents antistatiques et les agents ignifugeants.

13. Procédé de fabrication d'un objet en trois dimensions, ledit procédé comprenant le frittage laser de la composition sous forme de poudre selon l'une quelconque des revendications 1 à 12, pour obtenir un objet en trois dimensions.

14. Utilisation de la composition selon l'une des revendications 1 à 12 comme matériau pour le frittage laser en trois dimensions.

## Patentansprüche

1. Pulverförmige Zusammensetzung, die ein thermoplastisches Fluorpolymer und ein hydrophobe Fließhilfsmittel umfasst, wobei die Zusammensetzung einem Erhitzen auf eine Temperatur von T_{f} - 40 °C bis T_{f} - 5 °C unterzogen worden ist, wobei es sich bei T_{f} um die mittels DSC gemessene Schmelztemperatur des thermoplastischen Polymers handelt mit 20°C/min, wobei das hydrophobe Fließhilfsmittel aus: gefällten Siliciumdioxiden, Quarzstäuben, Quarzgläsern, pyrogenen Kieselsäuren, glasartigen Phosphaten, glasartigen Boraten, glasartigen Oxiden, amorphem Aluminiumoxid, Titandioxid, Talk, Glimmer, Kaolin, Attapulgit, Calciumsilicaten, Aluminiumoxid und Magnesiumsilicaten ausgewählt ist.

2. Zusammensetzung nach Anspruch 1, die eine Kompressionskraft von weniger als 2 N, vorzugsweise weniger als 1,5 N, aufweist, die mittels eines Kompressionstests gemessen wird, der an einem der Wärmebehandlung unterzogenen Pulver durchgeführt wird.

3. Zusammensetzung nach einem der Ansprüche 1 und 2, wobei es sich bei dem Fluorpolymer um ein Homopolymer oder ein Copolymer handelt, das mindestens ein nachstehend aufgeführtes Monomer umfasst: Vinylfluorid, Vinylidenfluorid, Trifluorethylen, Chlortrifluorethylen, 1,2-Difluorethylen, Tetrafluorethylen; Hexafluorpropylen; Perfluor(alkylvinyl)ether, wie Perfluor(methylvinyl)ether, Perfluor(ethylvinyl)ether und Perfluor(propylvinyl)ether; Perfluor(1,3-dioxol); Perfluor(2,2-dimethyl-1,3-dioxol); das Produkt der Formel CF₂=CFOCF₂CF(CF₃)OCF₂CF₂X, wobei X SO₂F, CO₂H, CH₂OH, CH₂OCN oder CH₂OPO₃H ist; das Produkt der Formel CF₂=CFOCF₂CF₂SO₂F; das Produkt der Formel F(CF₂)nCH₂OCF=CF₂, wobei n 1, 2, 3, 4 oder 5 ist; das Produkt der Formel R₁CH₂OCF=CF₂, wobei R₁ Wasserstoff oder F(CF₂)ₘ ist und m 1, 2, 3 oder 4 beträgt; das Produkt der Formel R₂OCF=CH₂, wobei R₂ F(CF₂)p ist und p 1, 2, 3 oder 4 ist; Perfluorbutylethylen (PFBE); 3,3,3-Trifluorpropen und 2-Trifluormethyl-3,3,3-trifluor-1-propen.

4. Zusammensetzung nach einem der Ansprüche 1 bis 3, wobei es sich bei dem Fluorpolymer um ein Polymer handelt, das von Vinylidenfluorid stammende Einheiten enthält und aus einem Polyvinylidenfluorid-Homopolymer und Copolymeren ausgewählt ist, die mindestens 50 Mol-% und vorzugsweise mindestens 75 Mol-% von Vinylidenfluorid stammende Einheiten, Vinylidenfluorid-Einheiten umfassen und wobei der Rest der Einheiten von mindestens einem anderen Comonomer stammt, das aus: Vinylfluorid, Trifluorethylen, Chlortrifluorethylen, 1,2-Difluorethylen; Tetrafluorethylen; Hexafluorpropylen; Perfluor(alkylvinyl)ethern, wie Perfluor(methylvinyl)ether, Perfluor(ethylvinyl)ether und Perfluor(propylvinyl)ether; Perfluor(1,3-dioxol); Perfluor(2,2-dimethyl-1,3-dioxol) und Mischungen davon ausgewählt ist.

5. Zusammensetzung nach einem der Ansprüche 1 bis 3, wobei das Fluorpolymer aus Copolymeren von Ethylen und Chlortrifluorethylen, Ethylen und Terafluorethylen, Hexafluorpropylen und Tetrafluorethylen, Tetrafluorethylen und einem Monomer der Familie der Perfluor(alkylvinyl)ether ausgewählt ist.

6. Zusammensetzung nach einem der Ansprüche 1 bis 5, wobei das Fluorpolymer eine Viskosität von weniger als oder gleich 1600 Pa.s, vorzugsweise weniger als oder gleich 1000 Pa.s, aufweist, gemessen bei einer Temperatur von 232 °C und einer Scherrate von 100 s⁻¹ gemäß der Norm ASTM D3825.

7. Zusammensetzung nach einem der Ansprüche 1 bis 6, wobei das Fluorpolymerpulver eine Partikelgröße aufweist, die durch einen Dv50 von kleiner als oder gleich 100 µm, vorzugsweise zwischen 25 und 80 Mikrometer, definiert ist.

8. Zusammensetzung nach einem der Ansprüche 1 bis 7, wobei das Fluorpolymer ein Zahlenmittel der Molmasse von 5 kDa bis 200 kDa, vorzugsweise von 5 kDa bis 150 kDa und noch stärker bevorzugt von 5 kDa bis 120 kDa, aufweist.

9. Zusammensetzung nach Anspruch 8, wobei das hydrophobe Fließhilfsmittel ein hydrophober Quarzstaub ist.

10. Zusammensetzung nach einem der Ansprüche 1 bis 9, wobei der Massenanteil des Fließhilfsmittels zwischen 0,01 und 5 %, vorzugsweise zwischen 0,025 und 1 %, des Gesamtgewichts der Zusammensetzung liegt.

11. Zusammensetzung nach einem der Ansprüche 1 bis 10, die aus einem Fluorpolymer und einem Fließhilfsmittel besteht.

12. Zusammensetzung nach einem der Ansprüche 1 bis 10, die außerdem bis zu 50 Gew.-% eines oder mehrerer Additive umfasst, die aus farbgebenden Mitteln, Pigmenten zur Farbgebung, Pigmenten zur Absorption von Infrarot, Ruß, flammhemmenden Additiven, Glasfasern, Kohlenstofffasern, antioxidativen Stabilisierungsmitteln, Lichtstabilisatoren, Schlagzähmodifizierern, Antistatika und flammhemmenden Mitteln ausgewählt sind.

13. Verfahren zur Herstellung eines dreidimensionalen Gegenstands, wobei das Verfahren das Lasersintern der pulverförmigen Zusammensetzung nach einem der Ansprüche 1 bis 12 umfasst, um einen dreidimensionalen Gegenstand zu erhalten.

14. Verwendung der Zusammensetzung nach einem der Ansprüche 1 bis 12 als Material für das dreidimensionale Lasersintern.

## Claims

1. A composition in powder form comprising a thermoplastic fluoropolymer and a hydrophobic flow agent, said composition having undergone heating at a temperature ranging from Tₘ - 40°C to Tₘ - 5°C, Tₘ being the melting temperature of the thermoplastic polymer measured by DSC at 20°C/min, wherein said flow agent is chosen from: precipitated silicas, fumed silicas, vitreous silicas, pyrogenic silicas, vitreous phosphates, vitreous borates, vitreous oxides, amorphous alumina, titanium dioxide, talc, mica, kaolin, attapulgite, calcium silicates, alumina and magnesium silicates.

2. The composition as claimed in claim 1, having a compressive force of less than 2 N, preferably less than 1.5 N as measured by a compression test carried out on the powder that has undergone the heat treatment.

3. The composition as claimed in one of claims 1 and 2, wherein the fluoropolymer is a homopolymer or a copolymer comprising at least one monomer listed below: vinyl fluoride; vinylidene fluoride; trifluoroethylene; chlorotrifluoroethylene; 1,2-difluoroethylene; tetrafluoroethylene; hexafluoropropylene; perfluoro(alkyl vinyl) ethers such as perfluoro(methyl vinyl) ether, perfluoro(ethyl vinyl) ether and perfluoro(propyl vinyl) ether; perfluoro(1,3-dioxole); perfluoro(2,2-dimethyl-1,3-dioxole); the product of formula CF₂=CFOCF₂CF(CF₃)OCF₂CF₂X wherein X is SO₂F, CO₂H, CH₂OH, CH₂OCN or CH₂OPO₃H; the product of formula CF₂=CFOCF₂CF₂SO₂F; the product of formula F(CF₂)nCH₂OCF=CF₂ wherein n is 1, 2, 3, 4 or 5; the product of formula R₁CH₂OCF=CF₂ wherein R₁ is hydrogen or F(CF₂)ₘ and m is equal to 1, 2, 3 or 4; the product of formula R₂OCF=CH₂ wherein R₂ is F(CF₂)p and p is 1, 2, 3 or 4; perfluorobutyl ethylene (PFBE); 3,3,3-trifluoropropene and 2-trifluoromethyl-3,3,3-trifluoro-1-propene.

4. The composition as claimed in one of claims 1 to 3, wherein said fluoropolymer is a polymer comprising units derived from vinylidene fluoride, and is chosen from polyvinylidene fluoride homopolymer and copolymers comprising at least 50 mol%, and preferably at least 75 mol% of units derived from vinylidene fluoride units and the remainder of the units derived from at least one other comonomer chosen from: vinyl fluoride; trifluoroethylene; chlorotrifluoroethylene; 1,2-difluoroethylene; tetrafluoroethylene; hexafluoropropylene; perfluoro(alkyl vinyl) ethers such as perfluoro(methyl vinyl) ether, perfluoro(ethyl vinyl) ether and perfluoro(propyl vinyl) ether; perfluoro(1,3-dioxole); perfluoro(2,2-dimethyl-1,3-dioxole), and mixtures thereof.

5. The composition as claimed in one of claims 1 to 3, wherein said fluoropolymer is chosen from copolymers of ethylene and chlorotrifluoroethylene, of ethylene and tetrafluoroethylene, of hexafluoropropylene and tetrafluoroethylene, of tetrafluoroethylene and a monomer from the family of perfluoro(alkyl vinyl) ethers.

6. The composition as claimed in one of claims 1 to 5, wherein said fluoropolymer has a viscosity of less than or equal to 1600 Pa.s, preferably of less than or equal to 1000 Pa.s, measured at a temperature of 232°C and at a shear rate of 100 s⁻¹ according to the standard ASTM D3825.

7. The composition as claimed in one of claims 1 to 6, wherein the fluoropolymer powder has a particle size defined by a Dv50 of less than or equal to 100 µm, preferably between 25 and 80 micrometers.

8. The composition as claimed in one of claims 1 to 7, wherein said fluoropolymer has a number-average molecular mass ranging from 5 kDa to 200 kDa, preferably from 5 kDa to 150 kDa, and more preferentially still from 5 kDa to 120 kDa.

9. The composition as claimed in claim 8, wherein said hydrophobic flow agent is a hydrophobic fumed silica.

10. The composition as claimed in one of claims 1 to 9, wherein the weight proportion of the flow agent is between 0.01% and 5%, preferably between 0.025% and 1% of the total weight of the composition.

11. The composition as claimed in one of claims 1 to 10, consisting of a fluoropolymer and a flow agent.

12. The composition as claimed in one of claims 1 to 10, further comprising up to 50% by weight of one or more additives chosen from dyes, pigments for coloring, pigments for infrared absorption, carbon black, fire-retardant additives, glass fibers, carbon fibers, antioxidant stabilizers, light stabilizers, impact modifiers, antistatic agents and flame retardants.

13. A process for manufacturing a three-dimensional object, said process comprising the laser sintering of the composition in powder form as claimed in any one of claims 1 to 13, in order to obtain a three-dimensional object.

14. The use of the composition as claimed in one of claims 1 to 13, as material for three-dimensional laser sintering.
